# FASCICULE DE BREVET EUROPEEN

(11) **EP 1 986 535 B1**
(45) Date de publication et mention de la délivrance du brevet: **29.12.2010**
(21) Numéro de dépôt: 07731012.6
(22) Date de dépôt: 20.02.2007
(51) Int. Cl.: A47J 43/25

(54) **ACCESSOIRE DE DEVERSEMENT POUR OUTIL DE TRAVAIL ROTATIF A DEBITER LES ALIMENTS, ET DISPOSITIF POUR DEBITER LES ALIMENTS**
ENTLADUNGSZUBEHÖR FÜR EIN DREHWERKZEUG ZUM SCHNEIDEN VON LEBENSMITTELN SOWIE VORRICHTUNG ZUM SCHNEIDEN VON LEBENSMITTELN
DISCHARGING ACCESSORY FOR A ROTARY WORK TOOL FOR CUTTING UP FOOD, AND DEVICE FOR CUTTING UP FOOD

(30) Priorité: 22.02.2006 FR 0601557
(43) Date de publication de la demande: 05.11.2008
(73) Titulaire: SEB S.A., 69130 Ecully (FR)
(72) Inventeur: ASTEGNO, Jean Paul, 64420 Espoey (FR)
(74) Mandataire: Kiehl, Hubert
(86) Numéro de dépôt international: PCT/FR2007/000302
(87) Numéro de publication internationale: WO 2007/096514

(56) Documents cités:
- FR-A- 862 124
- US-A- 1 527 087
- US-A- 2 529 473

## Description

La présente invention concerne le domaine technique des outils de travail rotatifs à débiter les aliments, tels que râpes et trancheuses, comportant au moins un organe de coupe externe sur une surface annulaire périphérique.

Les outils de travail rotatifs du type précité peuvent être utilisés dans des appareils à entraînement manuel et/ou dans des appareils à entraînement motorisé. La présente invention concerne plus particulièrement, mais non exclusivement, les outils de travail rotatifs cylindriques.

Un inconvénient des outils de travail rotatifs cylindriques du type précité est l'existence de phénomènes de bourrage. Ces phénomènes interviennent notamment avec des aliments un peu collants tels que le fromage râpé.

Le document FR 1 256 758 propose une râpe rotative cylindrique à organes de coupe externes, à l'intérieur de laquelle est agencé un cône. L'une des extrémités de la râpe est montée sur la périphérie de la base du cône, le sommet du cône s'étendant axialement jusqu'au niveau de l'autre extrémité de la râpe. Le cône sert de déflecteur pour les aliments râpés. Le cône est monté sur un axe d'entraînement et forme un moyeu pour la râpe.

Un inconvénient de la construction précitée est qu'elle complique le nettoyage de l'intérieur de la râpe.

Un autre inconvénient de la construction précitée est qu'elle rend plus onéreuse la fabrication de la râpe. Usuellement, les appareils à râper et/ou émincer sont livrés avec plusieurs types d'outils rotatifs permettant des découpes de différentes grosseurs et/ou de différentes sections. Chaque outil rotatif doit être équipé.

Un autre inconvénient de la construction précitée est qu'elle reste d'une efficacité limitée, les morceaux d'aliments découpés pouvant restés accrochés à l'outil rotatif.

Le document WO2004/012915 divulgue un accessoire de déversement susceptible d'être monté sur un boîtier recevant un outil de travail rotatif. Cet accessoire de déversement comporte un organe de déversement s'étendant à partir d'un bâti ménageant un passage d'évacuation, l'organe de déversement débouchant dans le passage d'évacuation.

Un objet de la présente invention est de proposer un dispositif du type précité, dont la construction soit économique.

Un objet de la présente invention est de proposer un dispositif du type précité, dont le nettoyage soit facilité.

Ces objets sont atteints avec un accessoire de déversement selon les caractéristiques de la revendication 1. Un tel accessoire de déversement peut être associé à un outil de travail rotatif du type précité pour faciliter l'évacuation des aliments. L'organe de raclage permet d'éviter la rétention d'aliments débités à l'intérieur de la paroi annulaire périphérique de l'outil de travail rotatif. L'organe de déversement permet de faciliter l'évacuation, par l'extrémité ouverte de l'outil de travail rotatif, des aliments débités décollés de la paroi annulaire périphérique de l'outil de travail rotatif. Les phénomènes de bourrage sont ainsi supprimés. L'organe de guidage prolongeant l'organe de déversement du côté opposé à l'organe de raclage permet d'éviter que des aliments débités soient entraînés entre l'accessoire de déversement et la paroi annulaire périphérique de l'outil de travail rotatif.

Avantageusement alors, l'organe de raclage s'étend longitudinalement à l'intérieur d'une surface de révolution. L'organe de raclage peut ainsi décoller les aliments débités sur une surface importante de la paroi annulaire périphérique.

Avantageusement encore, l'organe de déversement s'étend à partir du bâti et présente une partie inclinée vers un bord inférieur du passage d'évacuation. Cette disposition permet de simplifier la conception de l'accessoire de déversement.

Avantageusement encore, la largeur de l'organe de déversement diminue en direction du passage d'évacuation. Cette disposition se rencontre notamment avec un outil de travail rotatif présentant une paroi annulaire périphérique cylindrique.

Avantageusement encore, le bâti présente une face interne. Cette face interne peut être plaquée contre un boîtier logeant l'outil de travail rotatif. Avantageusement alors, l'organe de raclage s'étend du côté de la face interne du bâti. Avantageusement encore la partie inclinée de l'accessoire de déversement forme un angle aigu par rapport à la face interne du bâti.

Avantageusement encore, le bâti forme une couronne. Cette disposition permet de rigidifier le bâti tout en dégageant le passage d'évacuation.

Selon un mode de réalisation, l'organe de déversement prolonge l'organe de raclage.

Selon un autre mode de réalisation l'organe de raclage surplombe l'organe de déversement.

Avantageusement encore, l'accessoire de déversement comporte au moins un organe d'accrochage issu du bâti. L'accessoire de déversement peut ainsi être fixé à un boîtier logeant l'outil de travail rotatif.

Avantageusement alors, ledit organe d'accrochage est élastiquement déformable. Cette disposition permet de simplifier la réalisation de l'accessoire de déversement.

Ces objets sont atteints également avec un dispositif pour débiter des aliments, comportant un outil de travail rotatif présentant une paroi annulaire périphérique et une extrémité ouverte, un boîtier définissant un logement recevant l'outil de travail rotatif, le boîtier présentant une ouverture d'introduction débouchant dans le logement en regard d'au moins un organe de coupe externe agencé sur la paroi annulaire périphérique, le logement présentant une ouverture de sortie agencée en regard de l'extrémité ouverte, du fait qu'un accessoire de déversement du type précité est associé à l'outil de travail rotatif. Un tel dispositif pour débiter des aliments permet de réduire les phénomènes de collage des aliments à la paroi annulaire périphérique de l'outil de travail rotatif, et donc de limiter les phénomènes de bourrage. L'évacuation des aliments débités est améliorée.

Avantageusement alors, un organe de maintien interne appartenant à l'accessoire de déversement coopère avec le boîtier à l'intérieur du logement. Cette disposition permet de centrer l'accessoire de déversement dans le logement.

Avantageusement alors, l'organe de maintien interne est cylindrique et coopère avec une sortie d'entraînement montée mobile en rotation dans le logement. Cette disposition permet d'obtenir un maintien de l'extrémité de l'accessoire de déversement opposée au bâti.

Avantageusement encore, l'accessoire de déversement comporte au moins un organe d'accrochage issu du bâti, l'organe d'accrochage étant prévu pour venir en prise avec le boîtier.

Avantageusement alors, ledit organe d'accrochage est élastiquement déformable. Ainsi, l'accessoire de déversement est amovible par rapport au boîtier.

L'invention sera mieux comprise à l'étude de deux exemples de réalisation, pris à titre nullement limitatif, illustrés dans les figures annexées, dans lesquelles :
- la figure 1 est une vue en éclaté d'un exemple de réalisation d'un dispositif pour débiter des aliments comportant un accessoire de déversement selon l'invention,
- la figure 2 est une vue en perspective de l'accessoire de déversement illustré sur la figure 1,
- la figure 3 est une autre vue en perspective de l'accessoire de déversement illustré sur les figures 1 et 2,
- la figure 4 est une vue en perspective avant du dispositif pour débiter des aliments illustré à la figure 1, comportant un accessoire de déversement selon l'invention,
- la figure 5 est une autre vue en perspective avant du dispositif pour débiter des aliments illustré aux figures 1 et 4, comportant un accessoire de déversement selon l'invention,
- la figure 6 est une vue en perspective arrière du dispositif pour débiter des aliments illustré aux figures 1, 4 et 5, comportant un accessoire de déversement selon l'invention,
- la figure 7 est une vue schématique de face d'un autre exemple de réalisation d'un accessoire de déversement selon l'invention,
- la figure 8 est une vue schématique de côté de l'accessoire de déversement illustré à la figure 7.

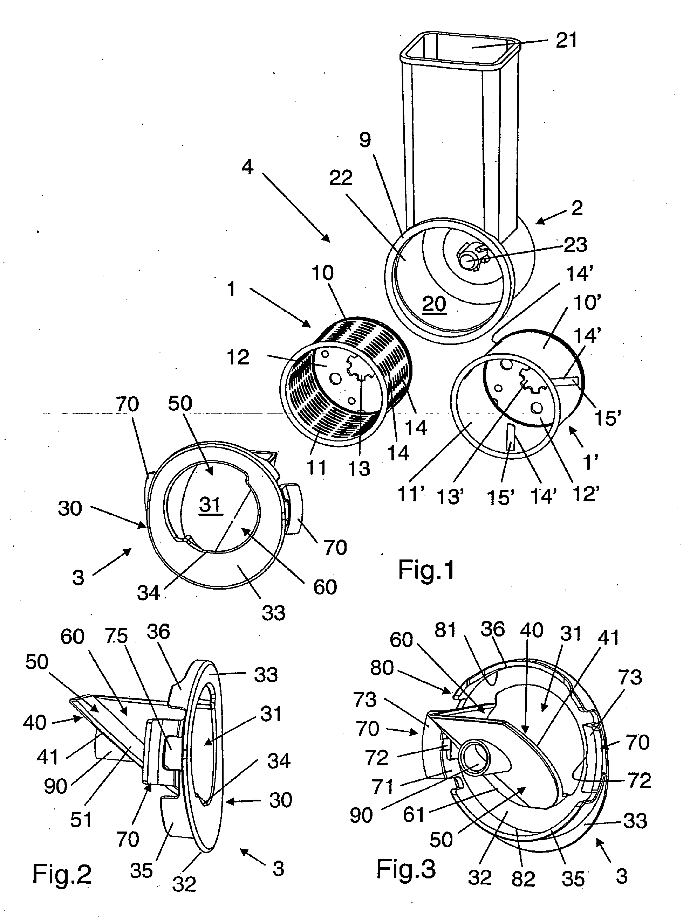

Un dispositif 4 pour débiter des aliments est illustré à la figure 1. Ce dispositif 4 comporte au moins un outil de travail rotatif 1 ; 1', et un boîtier 2..

Les outils de travail rotatifs 1 ; 1' présentent une paroi annulaire périphérique 10 ; 10' et une extrémité ouverte 11 ; 11'. La paroi annulaire périphérique 10 ; 10' est raccordée à une paroi de fond 12 ; 12' présentant une conformation d'entraînement 13 ; 13'. La paroi annulaire périphérique 10 ; 10' est munie d'organes de coupe externes 14 ; 14'. La paroi annulaire périphérique 10 ; 10' présente une géométrie cylindrique. Les organes de coupe externes 14 ; 14' présentent chacun une ouverture 15 ; 15' pour le passage des aliments débités à l'intérieur de la paroi annulaire périphérique 10 ; 10'.

Les outils de travail rotatifs 1 ; 1' diffèrent par les organes de coupe externes 14, 14' agencés sur la paroi annulaire périphérique 10 ; 10'. L'outil de travail rotatif 1 est prévu pour râper les aliments et comporte à cet effet une pluralité d'organes de coupe externes 14 agencés sur la largeur de la paroi annulaire périphérique 10. Plusieurs séries d'organes de coupe externes 14 sont agencés sur le pourtour de la paroi annulaire périphérique 10. L'outil de travail rotatif 1' est prévu pour émincer les aliments et comporte à cet effet des organes de coupe externes 14' s'étendant chacun sur une majeure partie de la largeur de la paroi annulaire périphérique 10'.

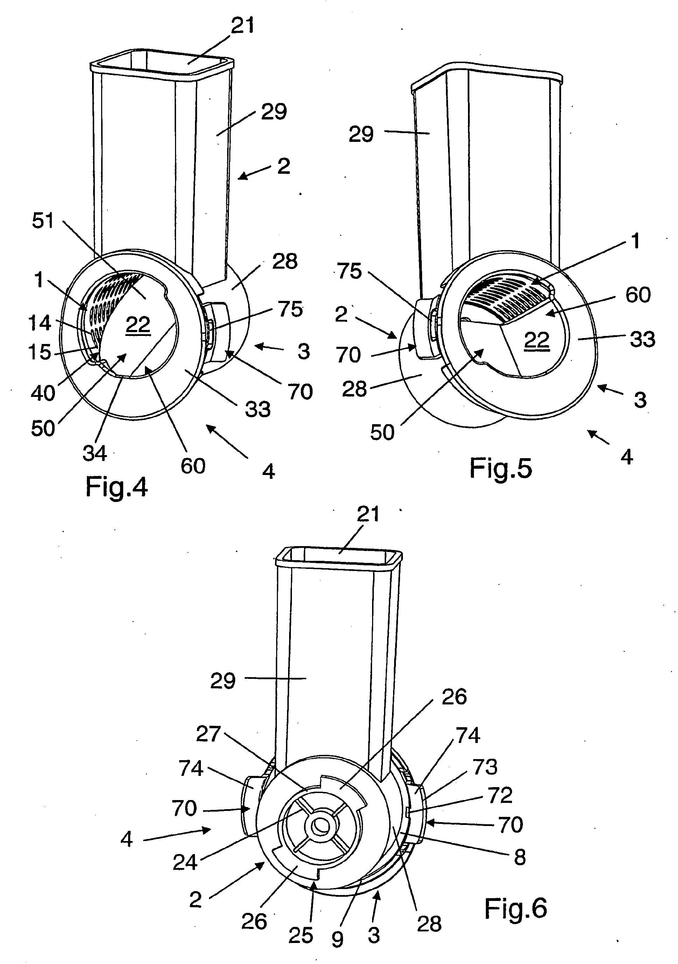

Le boîtier 2 définit un logement 20 recevant l'outil de travail rotatif 1 visible sur les figures 1 à 3, tel qu'illustré aux figures 4 à 6, ou l'outil de travail rotatif 1', visible sur la figure 1. L'outil de travail rotatif 1 ; 1' est monté amovible dans le boîtier 2.

Le boîtier 2 présente une ouverture d'introduction 21 débouchant dans le logement 20 en regard des organes de coupe externes 14 ; 14' agencés sur la paroi annulaire périphérique 10 ; 10'. Le logement 20 est cylindrique. Le logement 20 présente une ouverture de sortie 22 agencée en regard de l'extrémité ouverte 11 ; 11' de l'outil de travail rotatif 1 ; 1' disposé dans le logement 20. Le boîtier 2 présente une collerette externe 9 entourant l'ouverture de sortie 22.

Une sortie d'entraînement 23, visible sur la figure 1, est montée mobile en rotation dans le logement 20. La sortie d'entraînement 23 est reliée à un organe d'entraînement 24 disposé à l'extérieur du logement 20. L'outil de travail rotatif 1 ; 1' est monté amovible sur la sortie d'entraînement 23. Ainsi l'outil de travail rotatif 1 ou l'outil de travail rotatif 1' peut être mis en place dans le logement 20, selon le type de débit d'aliment souhaité.

Le boîtier 2 est prévu pour être monté sur un bloc moteur appartenant par exemple à un appareil de type hachoir à vis. A cet effet le boîtier 2 comporte des moyens de fixation 25 tels que par exemple deux ergots latéraux 26 disposés autour d'une couronne 27 entourant l'organe d'entraînement 24, visibles sur la figure 6, pour former une fixation de type baïonnette. Le boîtier 2 comprend un corps cylindrique 28 formant le logement 20. Le boîtier comprend une cheminée 29 raccordée au corps cylindrique 28. L'ouverture d'introduction 21 est ménagée dans la cheminée 29.

Le dispositif 4 comporte également un accessoire de déversement 3, 3' associé à l'outil de travail rotatif 1 ; 1'.

L'accessoire de déversement 3 illustré sur les figures 1 à 6 correspond à un premier exemple de réalisation.

L'accessoire de déversement 3 pour l'outil de travail rotatif 1 ; 1' comporte un bâti 30 ménageant un passage d'évacuation 31. Le bâti 30 présente une face interne 32, mieux visible sur la figure 3. Le bâti 30 forme une couronne 33. La couronne 33 ménage le passage d'évacuation 31.

L'accessoire de déversement 3 comporte un organe de raclage 40 et un organe de déversement 50. L'organe de raclage 40 est prévu pour alimenter l'organe de déversement 50.

L'organe de raclage 40 est relié au bâti 30. L'organe de raclage 40 s'étend du côté de la face interne 32 du bâti 30. L'organe de raclage 40 s'étend longitudinalement à l'intérieur d'une surface de révolution correspondant à la face interne de la paroi annulaire périphérique 10 ; 10' de l'outil de travail rotatif 1 ; 1'. Plus particulièrement, l'organe de raclage 40 présente un bord d'attaque 41 incurvé vers l'intérieur en direction du bâti 30. Le bord d'attaque 41 s'étend dans un plan.

L'organe de déversement 50 s'étend à partir du bâti 30. L'organe de déversement 50 débouche dans le passage d'évacuation 31. L'organe de déversement 50 présente une partie inclinée 51 vers un bord inférieur 34 du passage d'évacuation 31. La partie inclinée 51 de l'organe de déversement 50 forme un angle aigu par rapport à la face interne 32 du bâti 30. L'organe de déversement 50 est raccordé à la partie inférieure de la couronne 33 du bâti 30. La largeur de l'organe de déversement 50 diminue en direction du passage d'évacuation 31. Plus particulièrement, l'organe de déversement 50 prolonge l'organe de raclage 40.

Un organe de guidage 60 prolonge l'organe de déversement 50 du coté l'opposé à l'organe de raclage 40. L'organe de guidage 60 présente une paroi latérale 61 incurvée reliée à la couronne 33.

L'accessoire de déversement 3 comporte deux organes d'accrochage 70 issus du bâti 30. Les organes d'accrochage 70 sont élastiquement déformables. Les organes d'accrochage 70 sont prévus pour venir en prise avec le boîtier 2, tel que bien visible sur les figures 4, 5 et 6. Ainsi l'accessoire de déversement 3 visible sur les figures 1 à 6 est amovible par rapport au boîtier visible sur les figures 4, 5 et 6. Les organes d'accrochage 70 sont formés par deux languettes 71 munies chacune d'un ergot interne 72. Les ergots internes 72 sont prévus pour venir en prise avec des moyens de retenue 8 appartenant au boîtier 2, lesdits moyens de retenue étant formés par deux portions de la face arrière de la collerette externe 9. Les languettes 71 sont issues de la périphérie de la couronne 33. Les organes d'accrochage 70 comportent chacun un élément de manoeuvre 73. Les éléments de manoeuvre 73 prolongent les languettes 71. Les éléments de manoeuvre 73 présentent une face interne 74 inclinée. Les organes d'accrochage 70 comportent chacun une ouverture 75.

L'accessoire de déversement 3 comporte des moyens de maintien frontaux 80 en complément des organes d'accrochage 70. A cet effet le bâti 30 comporte une portion de collerette inférieure 35 et une portion de collerette supérieure 36 prévues pour venir entourer la collerette externe 9 du boîtier 1. Ainsi le bâti 30 comporte un moyen d'appui inférieur 81 formé par la portion de collerette inférieure 35 et un moyen d'appui supérieur 82 formé par la portion de collerette supérieure 36.

L'accessoire de déversement 3 comporte un organe de maintien interne 90 prévu pour coopérer avec le boîtier 2 à l'intérieur du logement 20. L'organe de maintien interne 90 est disposé sur la face inférieure de l'organe de déversement 50. L'organe de maintien interne 90 est cylindrique et coopère avec la sortie d'entraînement 23 montée mobile en rotation dans le logement 20.

L'accessoire de déversement 3 peut être réalisé en une seule pièce, notamment en matière plastique.

Le fonctionnement de l'accessoire de déversement 3 associé à l'outil de travail rotatif 1 ; 1' est le suivant.

L'utilisateur met en place l'outil de travail rotatif 1 ; 1' dans le logement 20 du boîtier 2. La conformation d'entraînement 13 ; 13' de l'outil de travail rotatif 1 ; 1' vient alors en prise avec la sortie d'entraînement 23.

L'utilisateur assemble ensuite l'accessoire de déversement 3 avec le boîtier 2 contenant l'outil de travail rotatif 1 ; 1'. La sortie d'entraînement 23 coopère alors avec l'organe de maintien 80 cylindrique pour centrer l'accessoire de déversement 3 dans le logement 20. Les faces internes 74 inclinées des organes d'accrochage 70 permettent l'encliquetage automatique des ergots 72 avec les moyens de retenue 8 du boîtier 2. Le moyen d'appui inférieur 81 formé par la portion de collerette inférieure 35 et le moyen d'appui supérieur 82 formé par la portion de collerette supérieure 36 contribuent au maintien de l'accessoire de déversement 3 par rapport au boîtier 2.

Le bord d'attaque 41 de l'organe de raclage 40 s'étend à faible distance de la paroi annulaire périphérique 10 ; 10' de l'outil de travail rotatif 1 ; 1'. La partie inclinée 51 de l'organe de déversement 50 est agencée en dessous de l'ouverture d'introduction 21. La paroi latérale 61 incurvée de l'organe de guidage 60 s'étend à faible distance de la paroi annulaire périphérique 10 ; 10' de l'outil de travail rotatif 1 ; 1'. L'organe de déversement 50 présente une inclinaison vers le bas en direction de l'ouverture de sortie 22. La largeur de l'organe de déversement 50 diminue en direction de l'ouverture de sortie 22.

Lorsque l'utilisateur pousse dans l'ouverture d'introduction 21 un ou plusieurs morceaux d'aliments à débiter, tel que par exemple du fromage ou des carottes, les segments débités par l'outil de travail rotatif 1 ou les lamelles débitées par l'outil de travail rotatif 1' sont détachés de la paroi annulaire périphérique 10 ; 10' par l'organe de raclage 40. Ces segments ou ces lanières détachés sont poussés par les segments ou les lanières continuant de sortir par les ouvertures 15 ; 15' des organes de coupe externes 14 ; 14' et sont dirigés vers l'ouverture de sortie 22 par l'organe de déversement 50. L'organe de guidage 60 évite que des segments ou des lanières soient entraînés entre l'accessoire de déversement 3 et la paroi annulaire périphérique 10 ; 10'. L'utilisateur peut retirer l'accessoire de déversement 3 du boîtier 2 en écartant les éléments de manoeuvre 73.

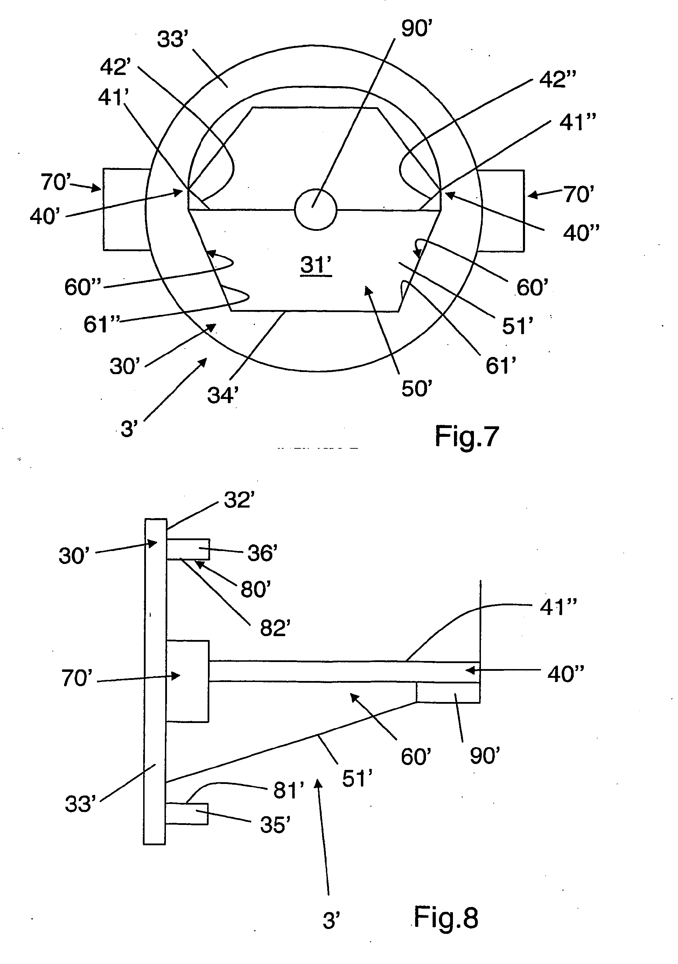

L'accessoire de déversement 3' illustré sur les figures 7 et 8 correspond à un deuxième exemple de réalisation.

L'accessoire de déversement 3' pour l'outil de travail rotatif 1 ; 1' diffère de l'accessoire de déversement 3 en ce qu'il comporte un organe de déversement 50', un organe de raclage 40' et un autre organe de raclage 40" prévus pour alimenter l'organe de déversement 50', ainsi qu'un organe de guidage 60' et un autre organe de guidage 60".

L'accessoire de déversement 3' comporte également un bâti 30' ménageant un passage d'évacuation 31'. Le bâti 30' présente une face interne 32'. Le bâti 30' forme une couronne 33'. La couronne 33' ménage le passage d'évacuation 31'.

Les organes de raclage 40', 40" sont reliés au bâti 30'. Les organes de raclage 40', 40" s'étendent du côté de la face interne 32' du bâti 30'. Les organes de raclage 40', 40" s'étendent longitudinalement à l'intérieur d'une surface de révolution correspondant à la face interne de la paroi annulaire périphérique 10 ; 10' de l'outil de travail rotatif 1 ; 1'.

Plus particulièrement, les organes de raclage 40' ; 40" surplombent l'organe de déversement 50'. Les organes de raclage 40', 40" présentent un bord d'attaque 41', 41" droit. Chacun des bords d'attaque 41' ; 41" est prolongé par une paroi 42' ; 42" inclinée vers l'organe de déversement 50'.

L'organe de déversement 50' s'étend à partir du bâti 30'. L'organe de déversement 50' débouche dans le passage d'évacuation 31'. L'organe de déversement 50' présente une partie inclinée 51' vers un bord inférieur 34' du passage d'évacuation 31'. La partie inclinée 51' de l'organe de déversement 50' forme un angle aigu par rapport à la face interne 32' du bâti 30'. L'organe de déversement 50' est raccordé à la partie inférieure de la couronne 33' du bâti 30'. La largeur de l'organe de déversement 50' diminue en direction du passage d'évacuation 31'.

L'organe de guidage 60' prolonge l'organe de déversement 50' du côté opposé à l'organe de raclage 40'. L'organe de guidage 60" prolonge l'organe de déversement 50' du côté opposé à l'organe de raclage 40". L'organe de raclage 40' est issu du sommet de l'organe de guidage 60", et l'organe de raclage 40" est issu du sommet de l'organe de guidage 60'. Les organes de guidage 60', 60" présentent une paroi latérale 61' ; 61" reliée à la couronne 33'.

L'accessoire de déversement 3' comporte également deux organes d'accrochage 70' issus du bâti 30', prévus pour venir en prise avec le boîtier 2. Les organes d'accrochage 70' sont élastiquement déformables.

L'accessoire de déversement 3' comporte également des moyens de maintien frontaux 80' en complément des organes d'accrochage 70'. A cet effet le bâti 30' comporte sur la face interne 32' deux ergots inférieurs 35' et deux ergots supérieurs 36' prévus pour venir entourer la collerette externe 9 du boîtier 2. Ainsi le bâti 30' comporte un moyen d'appui inférieur 81' formé par les ergots inférieurs 35' et un moyen d'appui supérieur 82' formé par les ergots supérieurs 36'.

L'accessoire de déversement 3' comporte également un organe de maintien interne 90' prévu pour coopérer avec le boîtier 2 à l'intérieur du logement 20. L'organe de maintien interne 90' est issu de l'organe de déversement 50'. L'organe de maintien interne 90' est cylindrique et coopère avec la sortie d'entraînement 23 montée mobile en rotation dans le logement 20.

L'accessoire de déversement 3' peut être réalisé en une seule pièce, notamment en matière plastique.

Le fonctionnement de l'accessoire de déversement 3' associé à l'outil de travail rotatif 1 ; 1' est voisin du fonctionnement de l'accessoire de déversement 3.

Toutefois, du fait de la présence de deux organes de raclage 40' ; 40", le boîtier 2 peut être utilisé avec des outils de travail rotatifs entraînés en rotation dans un sens et/ou dans l'autre sens.

A titre de variante, la paroi annulaire périphérique 10 ; 10' de l'organe de coupe rotatif 1 ; 1' peut être munie d'au moins un organe de coupe externe 14 ; 14'.

A titre de variante, le boîtier 2 peut présenter une ouverture d'introduction 21 débouchant dans le logement 20 en regard d'au moins un organe de coupe externe 14 ; 14' agencé sur la paroi annulaire périphérique 10 ; 10' de l'outil de coupe rotatif 1 ; 1'.

A titre de variante, la paroi annulaire périphérique 10 ; 10' ne présente pas nécessairement une géométrie cylindrique, mais peut présenter par exemple une géométrie tronconique.

A titre de variante, le boîtier 2 peut comporter des protubérances prévues pour coopérer avec les ouvertures 75 des organes d'accrochage 70. Avantageusement alors, le boîtier 2 comporte deux protubérances latérales diamétralement opposées agencées sur le corps 28 de part et d'autre de la cheminée 29.

A titre de variante, l'accessoire de déversement 3, 3' peut comporter au moins un organe d'accrochage 70 ; 70' issu du bâti 30 ; 30'.

A titre de variante, l'organe de maintien 80 ; 80' ne coopère pas nécessairement avec la sortie d'entraînement 23 et n'est pas nécessairement cylindrique.

A titre de variante pour le deuxième exemple de réalisation, l'accessoire de déversement 3' peut comporter un seul organe de raclage et/ou un seul organe de guidage.

La présente invention n'est nullement limitée à l'exemple de réalisation décrit et à ses variantes, mais englobe de nombreuses modifications dans le cadre des revendications.

## Revendications

1. Accessoire de déversement (3 ; 3') susceptible d'être monté sur un boîtier (2) recevant un outil de travail rotatif (1 ; 1') présentant une extrémité ouverte (11 ; 11') et une paroi annulaire périphérique (10 ; 10') munie d'au moins un organe de coupe externe (14 ; 14'), ledit accessoire de déversement (3 ; 3') comportant un organe de déversement (50 ; 50') s'étendant à partir d'un bâti (30 ; 30') ménageant un passage d'évacuation (31 ; 31'), l'organe de déversement (50 ; 50') débouchant dans le passage d'évacuation (31 ; 31'), **caractérisé en ce que** ledit accessoire de déversement (3 ; 3') comporte un organe de raclage (40 ; 40' ; 40") prévu pour alimenter l'organe de déversement (50 ; 50') et **en ce qu'**un organe de guidage (60 ; 60' ; 60") prolonge l'organe de déversement (50 ; 50') du côté opposé à l'organe de raclage (40 ; 40' ; 40").

2. Accessoire de déversement (3 ; 3') selon la revendication 1, **caractérisé en ce que** l'organe de raclage (40 ; 40' ; 40") s'étend longitudinalement à l'intérieur d'une surface de révolution.

3. Accessoire de déversement (3 ; 3') selon l'une des revendications 1 ou 2, **caractérisé en ce que** la largeur de l'organe de déversement (50 ; 50') diminue en direction du passage d'évacuation (31 ; 31').

4. Accessoire de déversement (3 ; 3') selon l'une des revendications 1 à 3, **caractérisé en ce que** l'organe de déversement (50 ; 50') s'étend à partir du bâti (30 ; 30') et présente une partie inclinée (51 ; 51') vers un bord inférieur (34 ; 34') du passage d'évacuation (31 ; 31').

5. Accessoire de déversement (3 ; 3') selon l'une des revendications 1 à 4, **caractérisé en ce que** le bâti (30 ; 30') présente une face interne (32 ; 32').

6. Accessoire de déversement (3 ; 3') selon la revendication 5, **caractérisé en ce que** l'organe de raclage (40 ; 40' ; 40") s'étend du côté de la face interne (32 ; 32') du bâti (30 ; 30').

7. Accessoire de déversement (3 ; 3') selon la revendication 4 et l'une des revendications 5 ou 6, **caractérisé en ce que** la partie inclinée (51 ; 51') de l'organe de déversement (50 ; 50') forme un angle aigu par rapport à la face interne (32 ; 32') du bâti (30 ; 30').

8. Accessoire de déversement (3 ; 3') selon l'une des revendications 1 à 7, **caractérisé en ce que** le bâti (30 ; 30') forme une couronne (33 ; 33').

9. Accessoire de déversement (3) selon l'une des revendications 1 à 8, **caractérisé en ce que** l'organe de déversement (50) prolonge l'organe de raclage (40).

10. Accessoire de déversement (3') selon l'une des revendications 1 à 8, **caractérisé en ce que** l'organe de raclage (40' ; 40") surplombe l'organe de déversement (50').

11. Accessoire de déversement (3 ; 3') selon l'une des revendications 1 à 10, **caractérisé en ce qu'**il comporte au moins un organe d'accrochage (70 ; 70') issu du bâti (30 ; 30').

12. Accessoire de déversement (3 ; 3') selon la revendication 11, **caractérisé en ce que** ledit organe d'accrochage (70 ; 70') est élastiquement déformable.

13. Dispositif (4) pour débiter des aliments, comportant un outil de travail rotatif (1 ; 1') présentant une paroi annulaire périphérique (10 ; 10') et une extrémité ouverte (11 ; 11'), un boîtier (2) définissant un logement (20) recevant l'outil de travail rotatif (1 ; 1'), le boîtier (2) présentant une ouverture d'introduction (21) débouchant dans le logement (20) en regard d'au moins un organe de coupe externe (14 ; 14') agencé sur la paroi annulaire périphérique (10 ; 10'), le logement (20) présentant une ouverture de sortie (22) agencée en regard de l'extrémité ouverte (11 ; 11'), **caractérisé en ce qu'**un accessoire de déversement (3 ; 3') selon l'une des revendications 1 à 12 est associé à l'outil de travail rotatif (1 ; 1').

14. Dispositif (4) pour débiter des aliments selon la revendication 13, **caractérisé en ce qu'**un organe de maintien interne (90 ; 90') appartenant à l'accessoire de déversement (3 ; 3') coopère avec le boîtier (2) à l'intérieur du logement (20).

15. Dispositif (4) pour débiter des aliments selon la revendication 14, **caractérisé en ce que** l'organe de maintien interne (90 ; 90') est cylindrique et coopère avec une sortie d'entraînement (23) montée mobile en rotation dans le logement (20).

16. Dispositif (4) pour débiter des aliments selon l'une des revendications 12 à 15, **caractérisé en ce que** l'accessoire de déversement (3 ; 3') comporte au moins un organe d'accrochage (70 ; 70') issu du bâti (30 ; 30'), l'organe d'accrochage (70 ; 70') étant prévu pour venir en prise avec le boîtier (2).

## Claims

1. A discharging accessory (3; 3') that can be mounted in a casing (2) receiving a rotary work tool (1; 1') having an open end (11; 11') and an annular peripheral wall (10; 10') provided with at least one external cutting member (14; 14'), said discharging accessory (3; 3') comprising a discharging member (50; 50') extending from a frame (30; 30') containing an outlet passage (31; 31'), the discharging member (50; 50') feeding into the outlet passage (31; 31'), **characterised in that** said discharging accessory (3; 3') comprises a scraper member (40; 40'; 40") provided for supplying the discharging member (50; 50') and **in that** a guiding member (60; 60'; 60") extends the discharging member (50; 50') on the opposite side of the scraper member (40; 40'; 40").

2. A discharging accessory (3; 3') according to claim 1, **characterised in that** the scraper member (40; 40'; 40") extends longitudinally inside a rotation surface.

3. A discharging accessory (3; 3') according to one of claims 1 or 2, **characterised in that** the width of the discharging member (50; 50') decreases towards the outlet passage (31; 31').

4. A discharging accessory (3; 3') according to one of claims 1 to 3, **characterised in that** the discharging member (50; 50') extends from the frame (30; 30') and has an inclined portion (51; 51') towards a lower edge (34; 34') of the outlet passage (31; 31').

5. A discharging accessory (3; 3') according to one of claims 1 to 4, **characterised in that** the frame (30; 30') has an inner surface (32; 32').

6. A discharging accessory (3; 3') according to claim 5, **characterised in that** the scraper member (40; 40'; 40") extends on the side of the inner surface (32; 32') of the frame (30; 30').

7. A discharging accessory (3; 3') according to claim 4 and one of claims 5 or 6, **characterised in that** the inclined portion (51; 51') of the discharging member (50; 50') forms an acute angle with respect to the inner surface (32; 32') of the frame (30; 30').

8. A discharging accessory (3; 3') according to one of claims 1 to 7, **characterised in that** the frame (30; 30') forms a crown (33; 33').

9. A discharging accessory (3) according to one of claims 1 to 8, **characterised in that** the discharging member (50) extends the scraper member (40).

10. A discharging accessory (3') according to one of claims 1 to 8, **characterised in that** the scraper member (40'; 40") overhangs the discharging member (50').

11. A discharging accessory (3; 3') according to one of claims 1 to 10, **characterised in that** it comprises at least one hooking member (70; 70') extending from the frame (30; 30').

12. A discharging accessory (3; 3') according to claim 11, **characterised in that** said hooking member (70; 70') is elastically deformable.

13. A device (4) for cutting up food, comprising a rotary work tool ( 1 ; 1') with an annular peripheral wall ( 1 0 ; 10') and an open end (11; 11'), a casing (2) defining a housing (20) that receives the rotary work tool (1; 1'), the casing (2) having an inlet opening (21) leading into the housing (20) facing at least one external cutting member (14; 14') provided on the annular peripheral wall (10; 10'), the housing (20) having an outlet opening (22) provided facing the open end (11; 11'), **characterised in that** a discharging accessory (3; 3') according to one of claims 1 to 12 is associated with the rotary work tool (1; 1').

14. A device (4) for cutting up food according to claim 13, **characterised in that** an internal holding member (90; 90') belonging to the discharging accessory (3; 3') cooperates with the casing (2) inside the housing (20).

15. A device (4) for cutting up food according to claim 14, **characterised in that** the internal holding element (90; 90') is cylindrical and cooperates with a drive output (23) mounted so that it can rotate inside the housing (20).

16. A device (4) for cutting up food according to one of claims 12 to 15, **characterised in that** the discharging accessory (3; 3') comprises at least one hooking member (70; 70') extending from the frame (30; 30'), the hooking member (70; 70') being designed to engage with the casing (2).

## Patentansprüche

1. Ausgabezubehör (3; 3'), das auf einem Gehäuse (2) befestigt werden kann, das ein drehendes Arbeitswerkzeug (1; 1') aufnimmt, das ein offenes Ende (11; 11') und eine umlaufende Ringwand (10; 10') aufweist, die mit mindestens einem äußeren Schneidelement (14; 14') ausgestattet ist, wobei das Ausgabezubehör (3; 3') ein Ausgabeelement (50; 50') umfasst, das sich ausgehend von einem Gestell (30; 30') erstreckt, das einen Ableerdurchlauf (31; 31') ausbildet, wobei das Ausgabeelement (50; 50') in den Ableerdurchlauf (31; 31') mündet, **dadurch gekennzeichnet, dass** das Ausgabezubehör (3; 3') ein Schabelement (40; 40'; 40") umfasst, das zum Versorgen des Ausgabeelements (50; 50') vorgesehen ist, und **dadurch**, dass ein Führungselement (60; 60'; 60") das Ausgabeelement (50; 50') auf der gegenüberliegenden Seite des Schabelementes (40; 40'; 40") verlängert.

2. Ausgabezubehör (3; 3') nach Anspruch 1, **dadurch gekennzeichnet, dass** sich das Schabelement (40; 40'; 40") der Länge nach im Inneren einer Umdrehungsfläche erstreckt.

3. Ausgabezubehör (3; 3') nach einem der Ansprüche 1 oder 2, **dadurch gekennzeichnet, dass** die Breite des Ausgabeelements (50; 50') in Richtung des Ableerdurchlaufs (31; 31') abnimmt.

4. Ausgabezubehör (3; 3') nach einem der Ansprüche 1 bis 3, **dadurch gekennzeichnet, dass** sich das Ausgabeelement (50; 50') ausgehend vom Gestell (30; 30') erstreckt und einen Teil (51; 51') aufweist, der zu einem unteren Rand (34; 34') des Ableerdurchlaufs (31; 31') hin geneigt ist.

5. Ausgabezubehör (3; 3') nach einem der Ansprüche 1 bis 4, **dadurch gekennzeichnet, dass** das Gestell (30; 30') eine Innenseite (32; 32') aufweist.

6. Ausgabezubehör (3; 3') nach Anspruch 5, **dadurch gekennzeichnet, dass** sich das Schabelement (40; 40'; 40") auf Seite der Innenseite (32; 32') des Gestells (30; 30') erstreckt.

7. Ausgabezubehör (3; 3') nach Anspruch 4 und einem der Ansprüche 5 oder 6, **dadurch gekennzeichnet, dass** der geneigte Teil (51; 51') des Ausgabeelements (50; 50') in Bezug auf die Innenseite (32; 32') des Gestells (30; 30') einen spitzen Winkel bildet.

8. Ausgabezubehör (3; 3') nach einem der Ansprüche 1 bis 7, **dadurch gekennzeichnet, dass** das Gestell (30; 30') einen Kranz (33; 33') bildet.

9. Ausgabezubehör (3) nach einem der Ansprüche 1 bis 8, **dadurch gekennzeichnet, dass** das Ausgabeelement (50) das Schabelement (40) verlängert.

10. Ausgabezubehör (3') nach einem der Ansprüche 1 bis 8, **dadurch gekennzeichnet, dass** das Schabelement (40', 40") über das Ausgabeelement (50') hinausragt.

11. Ausgabezubehör (3; 3') nach einem der Ansprüche 1 bis 10, **dadurch gekennzeichnet, dass** es mindestens ein Einhakelement (70; 70') umfasst, das aus dem Gestell (30; 30') hervorgeht.

12. Ausgabezubehör (3; 3') nach Anspruch 11, **dadurch gekennzeichnet, dass** das Einhakelement (70; 70') elastisch verformbar ist.

13. Vorrichtung (4) zum Zerkleinern von Nahrungsmitteln, umfassend ein drehendes Arbeitswerkzeug (1 ; 1'), das eine umlaufende Ringwand (10 ; 10') und ein offenes Ende (11; 11') aufweist, ein Gehäuse (2), das eine Aufnahme (20) definiert, die das drehende Arbeitswerkzeug (1; 1') aufnimmt, wobei das Gehäuse (2) eine Einführöffnung (21) aufweist, die in die Aufnahme (20) gegenüber mindestens einem äußeren Schneidelement (14; 14') mündet, das auf der umlaufenden Ringwand (10; 10') angeordnet ist, wobei die Aufnahme (20) eine Austrittsöffnung (22) aufweist, die gegenüber dem offenen Ende (11; 11') angeordnet ist, **dadurch gekennzeichnet, dass** ein Ausgabezubehör (3; 3') nach einem der Ansprüche 1 bis 12 mit dem drehenden Arbeitswerkzeug (1; 1') verbunden ist.

14. Vorrichtung (4) zum Zerkleinern von Nahrungsmitteln nach Anspruch 13, **dadurch gekennzeichnet, dass** ein inneres Halteelement (90; 90'), das dem Ausgabezubehör (3; 3') angehört, mit dem Gehäuse (2) im Inneren der Aufnahme (20) zusammenwirkt.

15. Vorrichtung (4) zum Zerkleinern von Nahrungsmitteln nach Anspruch 14, **dadurch gekennzeichnet, dass** das innere Halteelement (90; 90') zylindrisch ist und mit einem Antriebsausgang (23), der drehbar in der Aufnahme (20) befestigt ist, zusammenwirkt.

16. Vorrichtung (4) zum Zerkleinern von Nahrungsmitteln nach einem der Ansprüche 12 bis 15, **dadurch gekennzeichnet, dass** das Ausgabezubehör (3; 3') mindestens ein Einhakelement (70; 70') umfasst, das aus dem Gestell (30; 30') hervorgeht, wobei das Einhakelement (70; 70') vorgesehen ist, um in das Gehäuse (2) einzugreifen.
